# EUROPÄISCHE PATENTANMELDUNG

(11) **EP 4 485 098 A1**
(43) Veröffentlichungstag der Anmeldung: **01.01.2025**
(21) Anmeldenummer: 23182739.5
(22) Anmeldetag: 30.06.2023
(51) Int. Cl.: G05B 19/042, G05B 23/02

(54) **OPERATOR-KOORDINIERENDES LEITSYSTEM FÜR EINE TECHNISCHE ANLAGE UND BETRIEBSVERFAHREN**

(71) Anmelder: Siemens Aktiengesellschaft, 80333 München (DE)
(72) Erfinder: Lutz, Benjamin, 76327 Pfinztal (DE)
(74) Vertreter: Siemens Patent Attorneys

(57) **Zusammenfassung**

Ein erfindungsgemäßes Leitsystem (80) für eine technische Anlage (100), insbesondere Fertigungs- oder Prozessanlage, umfasst mehrere Benutzerschnittstellen (1, 60) für ein Bedienen und Beobachten der Anlage (100), wobei die Benutzerschnittstellen (1, 60) ausgebildet sind, Anlagenvisualisierungen (2) für Operatoren der Anlage (100) zu erzeugen. Das Leitsystem (80) ist dabei ausgebildet, zur Laufzeit der Anlage (100) von den Operatoren über die Benutzerschnittstellen (1, 60) Informationen über Zuordnungen von Anlagenvisualisierungen (2) zu den Operatoren zu erfassen und den Operatoren auf den Benutzerschnittstellen (1, 60) ihnen hierdurch jeweils zugeordnete Anlagenvisualisierungen (2) kenntlich zu machen.

Hierdurch kann eine laufzeitdynamische und operatoren-übergreifende Koordination vorrangiger Anlagenvisualisierungen für die Bedienung und Beobachtung von Anlagen erfolgen. Operatoren können sich effizient - auch für verteilte Anlagen unter Verwendung mobiler Endgeräte - abstimmen.

## Beschreibung

Die Erfindung betrifft ein Leitsystem für eine technische Anlage, insbesondere Fertigungs- oder Prozessanlage. Außerdem betrifft die Erfindung ein Verfahren zum Betrieb eines Leitsystems einer technischen Anlage.

Für ein Beobachten, Bedienen und Leiten technischer Anlagen, insbesondere großer Fertigungs- oder Prozessanlagen, kommen häufig als "Leitsystem" bezeichnete Automatisierungssysteme zum Einsatz. Ein derartiges System umfasst häufig eine oder mehrere industrielle Steuerungen, Automatisierungs-Server und Benutzerschnittstellen für Operatoren (d.h. Personen zur Bedienung und Beobachtung der Anlage). Bei den Benutzerschnittstellen kann es sich beispielsweise um PC-basierte Bedien- und Beobachtungsstationen (Operator Stations) oder auch um mobile Endgeräte handeln. Das Leitsystem kann auch Sensoren zur Ermittlung von Messwerten sowie verschiedene Aktoren umfassen. Zudem kann das Leitsystem sogenannte prozess- oder fertigungsnahe Komponenten umfassen, die zur Ansteuerung der Aktoren bzw. Sensoren dienen. Weiterhin kann das Leitsystem optional auch weitere Recheneinheiten für komplexere Regelungen, Systeme zur Datenspeicherung und -verarbeitung sowie Systeme für das Engineering umfassen.

Für die Bedienung und Beobachtung der Anlagen werden den Operatoren zur Laufzeit (d.h. während des Betriebs) der Anlage auf den Benutzerschnittstellen dynamisierte Anlagenvisualisierungen erzeugt bzw. dargeboten. Die Anlagenvisualisierungen können Anlagenbilder, d.h. grafische Repräsentationen der Anlage bzw. ihrer Komponenten, und unterschiedliche grafische Ansichten zur Darstellung von Trendverläufen, Alarmsequenzen oder Zuständen von Prozessobjekten umfassen. In den Anlagenvisualisierungen können Operatoren weitere Fenster für Analysen oder zur Eingabe von Stellwerten öffnen, zum Beispiel Faceplates, Verlaufsanzeigen von Messwerten und Alarmmeldeanzeigen. Je nach Tätigkeit kann ein Operator eine Vielzahl von Fenstern geöffnet haben und gleichzeitig auch mehrere Eingaben tätigen.

In der EP 3 876 046 A1 ist ein Leitsystem einer technischen Anlage offenbart, welches eine Anpassung einer durch einen Operator Station Client erzeugten grafischen Darbietung einer Anlage durch einen Operator zu deren Laufzeit ermöglicht. Beispielsweise kann der Operator Anpassungen an der grafischen Darbietung vornehmen, in dem er Trendanzeigen und/oder Meldefolgen selektiert. Eine derartige Anpassung wird als eine "Anwenderselektion" bezeichnet. Die grafische Darbietung kann dabei ein Anlagenbild umfassen.

Aus der EP 3 637 205 A1 ist ein Leitsystem einer technischen Anlage bekannt, bei dem von einem ersten Bediener eines ersten Operator Station Clients, der mit einem Operator Station Server verbunden ist, vorgegebene Bedieninformationen zur Laufzeit der technischen Anlage derart in einem Speicher hinterlegt werden, dass diese zur Konfiguration einer Bildanzeige für einen zweiten Bediener eines zweiten Operator Station Clients abrufbar und verwendbar sind. Bei den Bedieninformationen kann es sich beispielsweise um Zusammenstellungen handeln, die der erste Bediener mittels des ersten Operator Station Clients vorgenommen hat. Unter einer Zusammenstellung wird beispielsweise eine Sammlung von Trends und Anlagenbildern verstanden, die als "vordefinierte" Selektion immer wieder geöffnet werden kann.

In einem Leitsystem kann es zudem tausende von Alarmquellen geben. Für ein effizientes Alarmmanagement muss ein Operator möglichst schnell Alarme erkennen und zu deren Quelle navigieren können. Die EP 4 083 731 A1 offenbart hierzu ein Leitsystem, bei dem für ein effizientes Alarmmanagement Alarme zu Gruppenalarmen zusammengefasst und diese dann den Operatoren visuell dargeboten werden.

Die EP 3508928 A1 offenbart ein Verfahren, bei dem einem Operator anhand einer Equipment-Hierarchie eine verbesserte Eingrenzung von Alarmen auf Prozessobjekte sowie anderer Objekte des Leitsystems ermöglicht wird.

Typischerweise handelt ein Operator, wenn im Betrieb Alarme auftreten, oder um routinemäßige Prüfungen oder Optimierungen vorzunehmen. Zur Navigation zwischen unterschiedlichen Anlagenvisualisierungen werden Anlagenvisualisierungs-Hierarchien genutzt - d.h. die für das Bedienen und Beobachten vorgesehenen Anlagenvisualisierungen werden über einen hierarchischen (auf- und zusammenklappbaren) Baum angeboten und können von dort aus angewählt zur Laufzeit geöffnet werden. Jeder Knoten der Hierarchie referenziert eine Anlagenvisualisierung und einen so genannten Gruppenalarmstatus. Der Gruppenalarmstatus stellt den Alarmstatus der jeweiligen Anlagenvisualisierung dar, d.h. alle Alarme der Prozessobjekte in einer Anlagenvisualisierung werden nach Alarmklassen getrennt aufsummiert und in der Visualisierungshierarchie nach oben verodert - in einer so genannten Gruppen- oder Sammelanzeige. So kann der Operator beim Betrachten der Hierarchie unmittelbar erkennen, in welcher Anlagenvisualisierung alarmgebende Prozessobjekte vorhanden sind und via Loop-In unmittelbar in diese Navigieren, selbst wenn diese bei einer zusammengeklappten Hierarchie nicht zu sehen ist.

Da oftmals mehrere hundert Anlagenvisualisierungen für die Bedienung und Beobachtung verfahrenstechnischer Anlagen notwendig sind, werden zum Fahren einer Anlage häufig mehrere Operatoren eingesetzt.

Ausgehend hiervon ist es Aufgabe vorliegender Erfindung, bei einem Leitsystem mit mehreren Operatoren die Bedienung und Beobachtung der Anlage noch weiter zu verbessern.

Diese Aufgabe wird gelöst durch ein Leitsystem für eine technische Anlage mit den Merkmalen des Anspruchs 1. Außerdem wird die Aufgabe gelöst durch ein Verfahren zum Betrieb eines Leitsystems einer technischen Anlage gemäß Anspruch 9. Vorteilhafte Ausgestaltungen sind jeweils Gegenstand der Unteransprüche. Ein Computerprogramm ist Gegenstand des Anspruchs 17.

Ein erfindungsgemäßes Leitsystem für eine technische Anlage, insbesondere Fertigungs- oder Prozessanlage, umfasst mehrere Benutzerschnittstellen für ein Bedienen und Beobachten der Anlage, wobei die Benutzerschnittstellen ausgebildet sind, Anlagenvisualisierungen für Operatoren der Anlage zu erzeugen. Das Leitsystem ist dabei ausgebildet, zur Laufzeit (d.h. während des Betriebs) der Anlage von den Operatoren über die Benutzerschnittstellen Informationen über Zuordnungen von Anlagenvisualisierungen zu den Operatoren zu erfassen und den Operatoren auf den Benutzerschnittstellen ihnen hierdurch jeweils zugeordnete Anlagenvisualisierungen kenntlich zu machen.

Die Erfindung geht dabei von der Erkenntnis aus, dass es je nach Situation im Lebenszyklus einer Anlage oder bei erhöhtem Alarmaufkommen notwendig ist, dass sich die verschiedenen Operatoren einer Anlage untereinander koordinieren und auf die im Moment vorrangigen Anlagenvisualisierungen sinnvoll aufteilen, so dass nicht mehrere Operatoren gleichzeitig dieselben Anlagenvisualisierungen bedienen und beobachten und dabei andere nicht minder vorrangige Anlagenvisualisierungen vernachlässigen. Dies wird in der Praxis häufig über "Zuruf" geregelt, was jedoch nur bedingt eine Lösung sein kann, gerade im Hinblick auf große verteilte verfahrenstechnische Anlagen und einer Bedienung und Beobachtung mit mobilen Endgeräten.

Mit der Erfindung können Operatoren nun während des Betriebs der Anlage über die Benutzerschnittstellen Anlagenvisualisierungen anhand von Kriterien sich selbst und/oder einem oder mehreren anderen Operatoren zuordnen. Operatoren, denen eine Anlagenvisualisierung zugeordnet ist, werden die ihnen jeweils zugeordneten Anlagenvisualisierung auf den Benutzerschnittstellen kenntlich gemacht, so dass sie schnell und intuitiv die ihnen jeweils zugeordneten Anlagenvisualisierung erkennen und anhand von Kriterien bearbeiten können. Das Kenntlichmachen der einem Operator jeweils zugeordneten Anlagenvisualisierungen kann beispielsweise durch eine Farbgebung oder durch spezielle Symbole auf der Benutzerschnittstelle erfolgen.

Vorzugsweise handelt es sich bei dem Kriterium um eine Priorität und eine Zuordnung eines Operators zu einer Anlagenvisualisierung bedeutet, dass er diese mit höherer Priorität, d.h. vorrangig, bearbeiten soll. Es ist aber auch denkbar, dass sich das Kriterium auf eine niedrigere Priorität, eine technische Kompetenz des Operators, oder andere Kriterien bezieht.

Operatoren können sich nun effizient - auch für verteilte Anlagen und unter Verwendung mobiler Endgeräte - hinsichtlich der Bearbeitung von Anlagenvisualisierungen abstimmen. Es ist eine laufzeitdynamische und operatoren-übergreifende Koordination der Bearbeitung von Anlagenvisualisierungen für die Bedienung und Beobachtung von Anlagen möglich.

Bei der technischen Anlage kann es sich beispielsweise um eine Prozessanlage der Prozessindustrie wie beispielsweise eine chemische, pharmazeutische oder petrochemische Anlage, eine Anlage aus der Nahrungs- und Genussmittelindustrie, eine Papierfabrik, ein Stahlwerk oder ein thermisches Kraftwerk handeln. Weiterhin sind umfasst auch jegliche Fertigungsanlagen aus der diskreten oder hybriden Fertigungsindustrie (z.B. zur Herstellung von Fahrzeugen, Batterien oder Halbleitern). Auch andere Anlagen wie z.B. zur Steuerung einer kommunalen Trinkwasserversorgung oder Abwasserentsorgung oder Anlagen zur Energieerzeugung wie z.B. Windräder oder Solaranlagen sind von dem Begriff der technischen Anlage umfasst.

Die Anlagenvisualisierung kann allgemein in an sich bekannter Weise eine grafische Wiedergabe eines Anlagenbildes der technischen Anlage, grafische Fenster mit Verlaufsanzeigen von Messwerten (z.B. Trendanzeigen) der technischen Anlage, Meldungsanzeigen, grafische Objekte, die technische Objekte der technischen Anlage repräsentieren, Textfelder für Eingaben des Operators wie z.B. für Stellwerte eines Reglers und dgl. umfassen. Im Falle einer Prozessanlage kann das Anlagenbild beispielsweise grafische Repräsentationen von Pumpen, Ventilen, Tanks, Rohrleitungen, Brennkammern oder dergleichen umfassen. Die grafischen Repräsentationen können dabei aktuelle Prozessmesswerte, Statuswerte, (Alarm-)Meldungen oder dergleichen umfassen.

Die Anlagenvisualisierung visualisiert dabei einen in der Anlage während des Betriebs dynamisch zu einem bestimmten Zeitpunkt tatsächlich vorliegenden Anlagenzustand, d.h. in der Anlage zu einem bestimmten Zeitpunkt vorliegende Werte von Prozessvariablen, Stellwerte, Regelgrößen, Messwerte, Alarme, Durchflüsse, Füllstände, Operatoreingaben etc.

Eine intuitiv einfache Zuordnung der Anlagenvisualisierungen zu Operatoren ist möglich, wenn das Leitsystem ausgebildet, die Anlagenvisualisierungen den Operatoren auf der Benutzerschnittstelle strukturiert in einem hierarchischen Baum darzubieten, der insbesondere eine technologische (z.B. verfahrenstechnische) Hierarchie der Anlage widerspiegelt. Beispielsweise kann das Leitsystem hierzu im Engineering einen Editor bereitstellen, über den die Anlagenvisualisierungen erzeugbar und konfigurierbar sind.

Von Vorteil ist das Leitsystem dann dazu ausgebildet, für jede der Anlagenvisualisierungen in dem Baum eine Möglichkeit zur Erfassung der Informationen über die Zuordnungen anzubieten.

Die Zuordnung der Anlagenvisualisierungen zu Operatoren kann dadurch noch weiter vereinfacht werden, dass das Leitsystem dazu ausgebildet ist, zur Laufzeit der Anlage automatisch in dem Leitsystem angemeldete Operatoren zu ermitteln und den Operatoren über die Benutzerschnittstellen für eine Zuordnung zur Auswahl anzubieten.

Wenn den Operatoren Zugriffsrechte für Anlagenvisualisierungen zugeordnet sind, ist das Leitsystem vorzugsweise dazu ausgebildet, für die Anlagenvisualisierungen nur jeweils diejenigen der Operatoren für eine Zuordnung zur Auswahl anzubieten, die ein Zugriffsrecht für die jeweiligen Anlagenvisualisierungen haben.

Gemäß einer vorteilhaften Ausgestaltung umfassen die Anlagenvisualisierungen jeweils ein Anlagenbild mit grafischen Repräsentanten von Objekten der Anlage.

Gemäß einer vorteilhaften Ausgestaltung ist das Leitsystem dazu ausgestaltet, während der Laufzeit der Anlage für die Operatoren zu einem Zeitpunkt dynamisch jeweils einen Gruppenalarm (manchmal auch als "Sammelalarm" bezeichnet) zu erzeugen und visuell auf den Benutzerschnittstellen darzubieten, wobei der Gruppenalarm ausschließlich nur Alarme von Anlagenobjekten zusammenfasst, die zu dem Zeitpunkt von den Anlagenvisualisierungen umfasst sind, die dem jeweiligen Operator zugeordnet sind. Der Gruppenalarm berücksichtigt somit lediglich die Alarme der einem Operator zugeordneten Anlagenvisualisierungen. Hierdurch wird einem Operator ein spezifisches Alarmmanagement ausgerichtet speziell auf die Bedienung und Beobachtung der ihm zu einem bestimmten Zeitpunkt zugeordneten Anlagenvisualisierungen, z.B. der ihm zugeordneten vorrangigen Anlagenbilder, bereitgestellt.

Bevorzugt umfasst das Leitsystem wenigstens einen Operator Station Server und mehrere mit dem Operator Station Server verbundene Operator Station Clients, wobei die Operator Station Clients die Benutzerschnittstellen bereitstellen und wobei der Operator Station Server dazu ausgebildet ist, Visualisierungsinformationen an die Operator Station Clients zu übertragen, und wobei die Operator Station Clients dazu ausgebildet sind, anhand der Visualisierungsinformationen die Anlagenvisualisierungen für die Operatoren auf den Benutzerschnittstellen zu erzeugen.

Unter einem "Operator Station Server" wird vorliegend ein Server verstanden, der zentral Daten eines Bedien- und Beobachtungssystems sowie in der Regel Alarm- und Messwertarchive eines Leitsystems einer technischen Anlage erfasst und Benutzern zur Verfügung stellt. Der Operator Station Server stellt in der Regel eine Kommunikationsverbindung zu Automatisierungssystemen der technischen Anlage her und gibt Daten der technischen Anlage zur Visualisierung an die Operator Station Clients weiter, die zur Bedienung und Beobachtung eines Betriebs der einzelnen Funktionselemente der technischen Anlage dienen. Der Operator Station Server kann über Client-Funktionen verfügen, um auf die Daten (Archive, Meldungen, Tags, Variablen) anderer Operator Station Server zuzugreifen.

Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Ein Operator der technischen Anlage kann über den Operator Station Client, welcher beispielsweise ein Tablet, ein Smartphone, ein Personal Computer, ein Rechner mit einer Großbildanzeige in einer Leitwarte oder dergleichen sein kann, zum Zwecke eines Bedienens und Beobachtens der technischen Anlage auf den Operator Station Server zugreifen.

Ein erfindungsgemäßes Verfahren zum Betrieb eines Leitsystems für eine technische Anlage, insbesondere Fertigungs- oder Prozessanlage, umfasst mehrere Benutzerschnittstellen für ein Bedienen und Beobachten der Anlage, wobei die Benutzerschnittstellen ausgebildet sind, Anlagenvisualisierungen für Operatoren der Anlage zu erzeugen. Dabei werden zur Laufzeit der Anlage von den Operatoren über die Benutzerschnittstellen Informationen über Zuordnungen von Anlagenvisualisierungen zu den Operatoren erfasst und den Operatoren auf den Benutzerschnittstellen ihnen hierdurch jeweils zugeordnete Anlagenvisualisierungen kenntlich gemacht.

Gemäß einer vorteilhaften Ausgestaltung des Verfahrens werden die Anlagenvisualisierungen den Operatoren strukturiert in einem hierarchischen Baum dargeboten, der insbesondere eine technologische Hierarchie der Anlage widerspiegelt.

Gemäß einer weiteren vorteilhaften Ausgestaltung des Verfahrens wird für jede der Anlagenvisualisierungen in dem Baum eine Möglichkeit zur Erfassung der Informationen über die Zuordnungen angeboten.

Von Vorteil werden dabei zur Laufzeit der Anlage in dem Leitsystem angemeldete Operatoren automatisch ermittelt und für eine Zuordnung zur Auswahl angeboten.

Wenn den Operatoren in dem Leitsystem Zugriffsrechte für Anlagenvisualisierungen zugeordnet sind, dann werden bevorzugt für die Anlagenvisualisierungen nur jeweils diejenigen der Operatoren für eine Zuordnung zur Auswahl angeboten werden, die ein Zugriffsrecht für die jeweiligen Anlagenvisualisierungen haben.

Die Anlagenvisualisierungen können dabei jeweils ein Anlagenbild mit grafischen Repräsentanten von Objekten der Anlage umfassen.

Gemäß einer besonders vorteilhaften Ausgestaltung wird während der Laufzeit der Anlage für die Operatoren zu einem Zeitpunkt dynamisch jeweils ein Gruppenalarm erzeugt und visuell auf den Benutzerschnittstellen dargeboten, der ausschließlich nur Alarme von Anlagenobjekten zusammenfasst, die zu dem Zeitpunkt von den Anlagenvisualisierungen umfasst sind, die dem jeweiligen Operator zugeordnet sind.

Bevorzugt umfasst das Leitsystem wenigstens einen Operator Station Server und mehrere mit dem Operator Station Server verbundene Operator Station Clients, wobei die Operator Station Clients die Benutzerschnittstellen bereitstellen, wobei der Operator Station Server Visualisierungsinformationen an die Operator Station Clients überträgt, und wobei die Operator Station Clients anhand der Visualisierungsinformationen die Anlagenvisualisierungen für die Operatoren auf den Benutzerschnittstellen erzeugen.

Ein erfindungsgemäßes Computerprogramm umfasst Befehle, die bei der Ausführung des Programms durch einen Computer diesen veranlassen, das vorstehend erläuterte Verfahren auszuführen.

Die für das erfindungsgemäße Leitsystem genannten Vorteile gelten entsprechend für das erfindungsgemäße Verfahren.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert; darin zeigen:
- FIG 1: eine Anlagen-Visualisierung für einen ersten Operator einer technischen Anlage auf einem ersten Operator Station Client;
- FIG 2: eine Detailansicht einer Hierarchie von Anlagenvisualisierungen und zugehöriger Alarme von FIG 1;
- FIG 3: einen Verfahrensablauf zur Koordination vorrangiger Anlagenvisualisierungen zwischen mehreren Operatoren;
- FIG 4: eine Visualisierung einer Anwenderselektion zur Zuordnung von Anlagenvisualisierungen zu Operatoren;
- FIG 5: eine Detailansicht der Anwenderselektion zur Zuordnung von Anlagenvisualisierungen zu Operatoren von FIG 4;
- FIG 6: eine Anlagen-Visualisierung für einen zweiten Operator der technischen Anlage auf einem zweiten Operator Station Client;
- FIG 7: eine Detailansicht einer Hierarchie von Anlagenvisualisierungen und zugehöriger Alarme von FIG 6;
- FIG 8: ein erfindungsgemäßes Leitsystem in einer schematischen Darstellung.

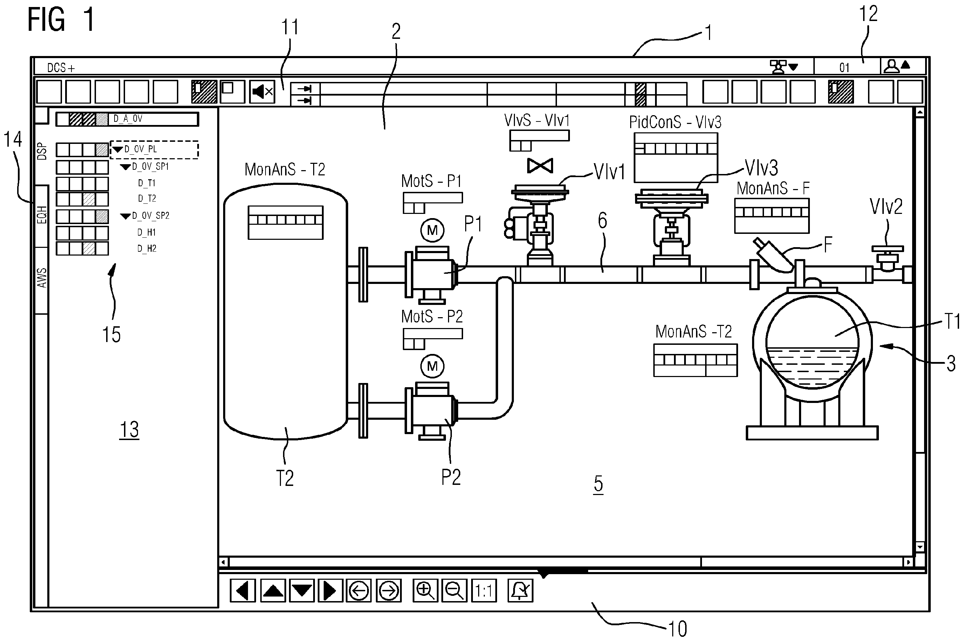

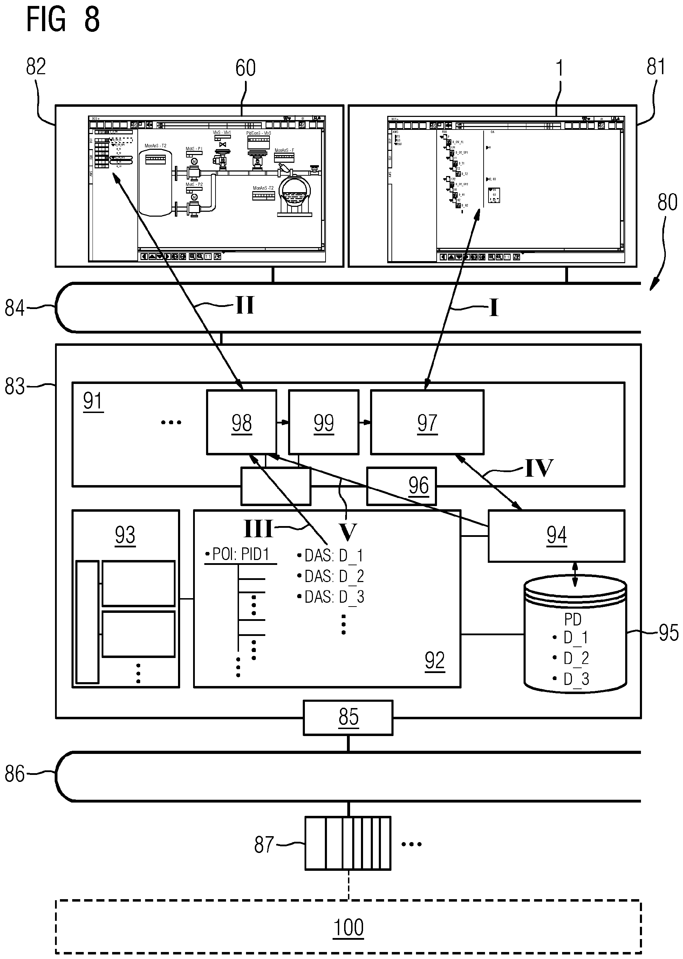

In FIG 1 ist eine Visualisierung 1 dargestellt, welche eine erste Benutzerschnittstelle, die hier beispielsweise von einem ersten Operator Station Client 81 (vgl. FIG 8) bereitgestellt wird, einem ersten Operator O1 einer technischen Anlage 100 (vgl. FIG 8) zur Bedienung und Beobachtung der Anlage darbietet. Bei der technischen Anlage handelt es sich beispielsweise um eine Fertigungs- oder Prozessanlage.

Die Visualisierung 1 umfasst als zentralen Bestandteil einen Bereich 3 für eine Anlagenvisualisierung 2. Weiterhin umfasst sie in einem unteren Bereich ein Operator-Bedienfeld 10, in einem oberen Bereich ein Alarmfeld 11 und in einem linken Bereich ein Operator-Selektions-Feld 13. In einem äußerst linken Bereich 14 befindet sich ein Auswahlmenü für drei unterschiedliche Sichten in dem Bereich 13, und zwar für eine Ausgabe von Anlagenvisualisierungen DSP, für eine Equipment-Hierarchie EQH und für Anwenderselektionen AWS. Rechts oben in einem Feld 12 wird der Name des aktuellen ersten Operators, hier "O1", ausgegeben.

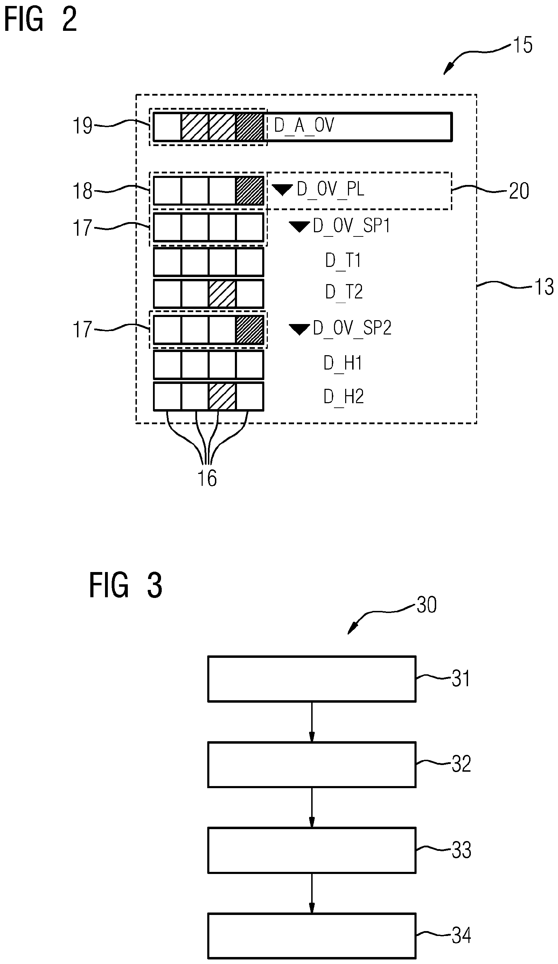

Im Fall von FIG 1 ist die Sicht für eine Ausgabe von Anlagenvisualisierungen DSP gewählt und entsprechend werden in dem Bereich 13 verschiedene Anlagenvisualisierungen strukturiert in einem hierarchischen (auf- und zusammenklappbaren) Baum 15 dargeboten und können von dort aus angewählt und zur Laufzeit der Anlage geöffnet werden. FIG 2 zeigt dies in vergrößerter Darstellung. Der Baum spiegelt dabei eine technologische Hierarchie (z.B. verfahrenstechnische Hierarchie) der Anlage wider. Die aktuell von dem Operator O1 ausgewählte und in dem Bereich 3 dargebotene Anlagenvisualisierung D_OV_PL ist dabei kenntlich gemacht, z.B. durch eine Hintergrundfärbung (hier symbolisiert durch eine strichlierte Linie 20, siehe FIG 2).

Die Anlagenvisualisierung 2 umfasst ein Anlagenbild 5 mit grafischen Repräsentationen von Rohrleitungen 6 und Prozessobjekten wie Tanks oder Kessel T1, T2, Pumpen P1, P2, Ventilen Vlv1, Vlv2, Vlv3 und Durchflussmesser F. Weiterhin umfasst die Anlagenvisualisierung 2 grafischen Repräsentationen zugehöriger Mess-, Regel- oder Ansteuerbausteine wie z.B. MonAnS-T1 (Überwachungsbaustein für einen analogen Messwert des Füllstands im Tank T1), MonAnS-T2 (Überwachungsbaustein für einen analogen Messwert des Füllstands im Tank T2), MonAnS-F (Überwachungsbaustein für einen analogen Messwert des Durchflusses in der Rohrleitung 6), MotS-P1 (Ansteuerbaustein für Pumpenmotor P1), MotS-P2 (Ansteuerbaustein für Pumpenmotor P2), PidConS-Vlv3 (PID-Regler-Baustein für steuerbares Ventil Vlv3), oder Vlvs-Vlv1 (Ventilansteuerungsbaustein für Ventil Vlv1) mit einer Ausgabe jeweils zugehöriger aktueller Prozessmesswerte, Statuswerte, (Alarm-)Meldungen oder dergleichen.

Die Anlagenvisualisierung 2 kann weiterhin hier nicht weiter dargestellte sogenannte Faceplates, Trendkurven für Messwerte sowie eine Alarmmeldeanzeige umfassen.

Die Anlagenvisualisierung 2 visualisiert dabei einen in der Anlage zu deren Laufzeit (d.h. im Betrieb) dynamisch zu einem bestimmten Zeitpunkt tatsächlich vorliegenden Anlagenzustand, d.h. in der Anlage zu einem bestimmten Zeitpunkt vorliegende Werte von Prozessvariablen, Stellwerte, Regelgrößen, Messwerte, Alarme, Durchflüsse, Füllstände, Operatoreingaben etc.

Wie in näherem Detail in FIG 2 dargestellt ist, werden in dem Bereich 13 links zu jeder der Anlagenvisualisierungen des Baumes 15 zugehörige Alarme von Prozessobjekten der jeweiligen Anlagenvisualisierungen ausgegeben, wobei die Alarme in unterschiedliche Alarmklassen unterteilt sind (im Ausführungsbeispiel sind es vier Alarmklassen), die jeweils durch ein quadratisches Element 16 repräsentiert werden. Jeder Knoten des Baumes 15 bzw. der hierdurch gebildeten Hierarchie referenziert dabei neben einer Anlagenvisualisierung auch einen so genannten Gruppenalarmstatus. Der Gruppenalarmstatus stellt den Alarmstatus der jeweiligen Anlagenvisualisierung dar, d.h. alle Alarme der Prozessobjekte in einer Anlagenvisualisierung unterhalb des Knotens werden nach Alarmklassen getrennt aufsummiert und in der Hierarchie nach oben verodert - in einer Anzeige eines so genannten Gruppenalarms (Sammelalarms) 17, 18 bzw. 19. So kann der Operator beim Betrachten der Hierarchie unmittelbar erkennen in welcher Anlagenvisualisierung alarmgebende Prozessobjekte vorhanden sind und via Loop-In unmittelbar in diese navigieren, selbst wenn diese bei einer zusammengeklappten Hierarchie nicht zu sehen sind. Auf oberster Ebene der Hierarchie wird ein Überblicks-Gruppenalarm (bzw. Sammelalarm) 19 ausgegeben, der alle in der Hierarchie darunter liegenden Alarme bzw. Gruppenalarme zusammenfasst.

Unter Zuhilfenahme von FIG 3 soll nun ein erfindungsgemäßer Verfahrensablauf 30 zur Koordinierung der Bearbeitung von Anlagenvisualisierungen zwischen mehreren Operatoren erläutert werden.

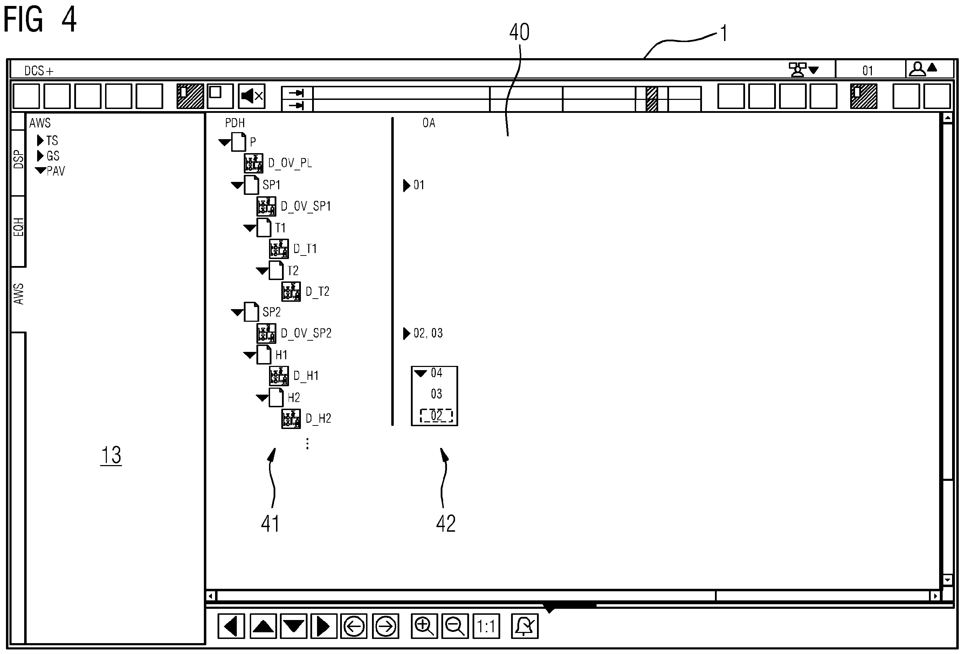

In einem ersten Schritt 31 wählt der Operator O1 die Sicht für die Anwenderselektion AWS aus. Es öffnet sich dann - wie in FIG 4 dargestellt ist - ein Fenster, in dem Operator O1 in dem linken Bereich 13 die Anwenderselektionen "Trend-Selektionen" TS, "Gruppenalarm-Selektionen" GS und "priorisierte Anlagenvisualisierungen" PAV zur Auswahl angeboten. Die Anwenderselektion "priorisierte Anlagenvisualisierungen" PAV dient dabei zur erfindungsgemäßen Zuordnung von Anlagenvisualisierungen zu Operatoren, damit Operatoren festlegen können, welche Anlagenvisualisierungen für welche Operatoren mit welcher Priorität (hier z.B. vorrangiger Priorität) zu bearbeiten sind.

Ein Operator Station Server 83 (siehe FIG 8) des Leitsystems ist dabei dazu ausgebildet, zur Laufzeit der Anlage für in dem Leitsystem angemeldete Operatoren automatisch zu ermitteln, ob diese überhaupt berechtigt sind, Priorisierungen von Anlagenvisualisierungen vorzunehmen, und die Anwenderselektion "priorisierte Anlagenvisualisierungen" PAV wird nur berechtigten Operatoren zur Auswahl angeboten.

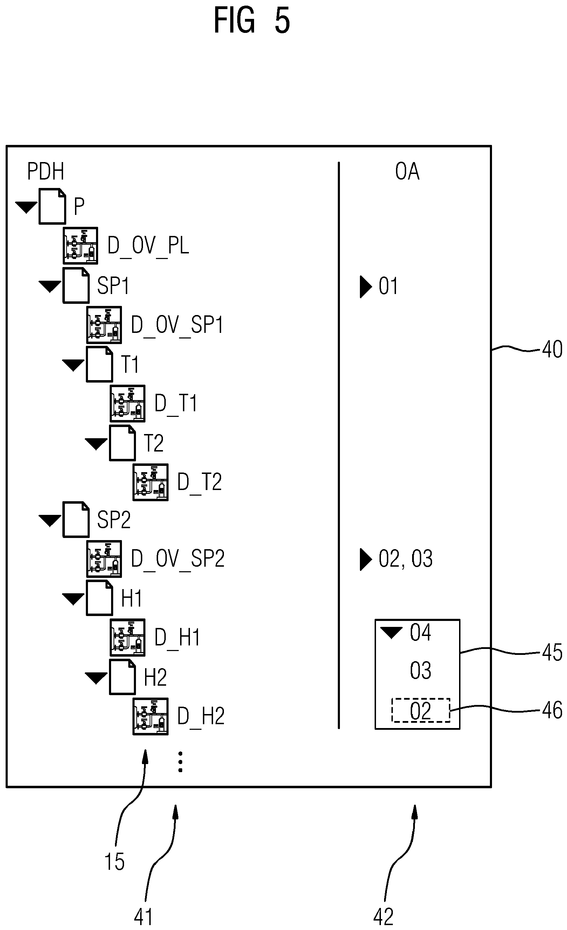

In einem zweiten Schritt 32 wählt der Operator O1 in dem linken Bereich die Option "priorisierte Anlagenvisualisierungen" PAV aus, wodurch sich rechts davon ein als Sidebar ausgestaltetes Fenster 40 öffnet, in welchem dem Operator O1 in einem linken Bereich 41 für die Hierarchie der Anlagenvisualisierungen PDH die verschiedene Anlagenvisualisierungen strukturiert in dem hierarchischen Baum 15 dargeboten werden, der die technologische Hierarchie der Anlage widerspiegelt. Dies ist im Detail in FIG 5 dargestellt. Die Visualisierung 1 bietet nun in einem rechten Bereich 42 des Fensters 40 für jede der Anlagenvisualisierungen in dem Baum 15 eine Möglichkeit zur Erfassung der Informationen über deren Zuordnungen OA zu einem der Operatoren an.

Der Operator Station Server 83 (siehe FIG 8) ist dabei dazu ausgebildet, zur Laufzeit der Anlage in dem Leitsystem angemeldete Operatoren automatisch zu ermitteln und den Operatoren über Auswahlfelder in dem Bereich 42 des Fensters 40 für eine Zuordnung zur Auswahl anzubieten.

Wenn den Operatoren Zugriffsrechte für die Anlagenvisualisierungen zugeordnet sind, dann ist der Operator Station Server 83 (siehe FIG 8) dazu ausgebildet, in den Auswahlfeldern nur jeweils diejenigen der Operatoren für eine Zuordnung zur Auswahl anzubieten, die ein Zugriffsrecht für die jeweiligen Anlagenvisualisierungen haben.

In einem dritten Schritt 33 ordnet nun der Operator O1 eine oder mehrere der Anlagenvisualisierungen sich selbst oder eine oder mehrere der anderen angebotenen Operatoren zu.

FIG 4 und 5 zeigen hierzu beispielhaft eine bereits von dem Operator O1 erfolgte Zuordnung des ersten Operators O1 zu der Anlagenvisualisierung SP1 und eine bereits erfolgte Zuordnung eines zweiten Operators O2 und eines dritten Operators O3 zu der Anlagenvisualisierung D_OV_SP2. Weiterhin zeigen FIG 4 und 5 ein geöffnetes Operator-Auswahlfeld 45 für die Anlagenvisualisierung D_H1, in dem die Operatoren O2, O3 und O4 zur Auswahl angeboten werden. Durch eine farbliche Hinterlegung (hier symbolisiert durch eine strichlierte Linie 46) ist gekennzeichnet, dass in dem Auswahlfeld 45 aktuell der Operator O2 vorausgewählt ist.

In einem vierten Schritt 34 werden nun dem Operator O1 und den anderen Operatoren, denen jeweils eine oder mehrere der Anlagenvisualisierungen zugeordnet sind, die jeweils zugeordneten Anlagenvisualisierungen kenntlich gemacht. Außerdem wird für die Operatoren zu einem Zeitpunkt dynamisch jeweils ein Gruppenalarm erzeugt und visuell auf den Benutzerschnittstellen dargeboten, der ausschließlich nur Alarme von Anlagenobjekten zusammenfasst, die zu dem Zeitpunkt von den Anlagenvisualisierungen umfasst sind, die dem jeweiligen Operator zugeordnet sind.

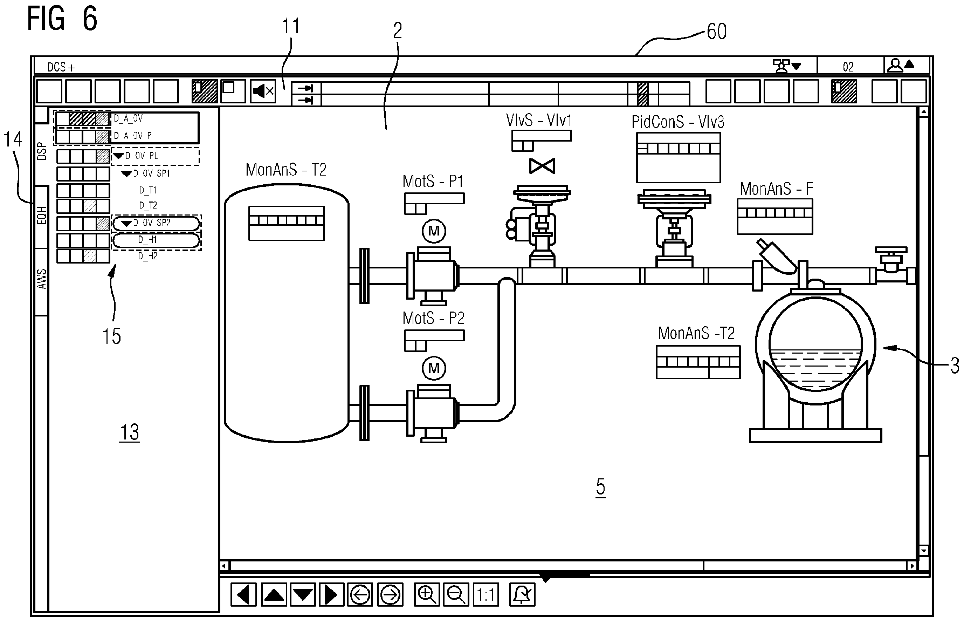

FIG 6 zeigt hierzu eine Visualisierung 60, welche eine zweite Benutzerschnittstelle, die hier beispielsweise von einem zweiten Operator Station Client 82 (vgl. FIG 8) bereitgestellt wird, dem zweiten Operator O2 der Anlage zur Bedienung und Beobachtung der Anlage darbietet. Die Visualisierung 60 ist hinsichtlich Struktur und Inhalt dabei ähnlich wie die für den Operator O1 gemäß FIG 1 erzeugte Visualisierung 1, weshalb gleiche Elemente auch mit den gleichen Bezugszeichen versehen sind.

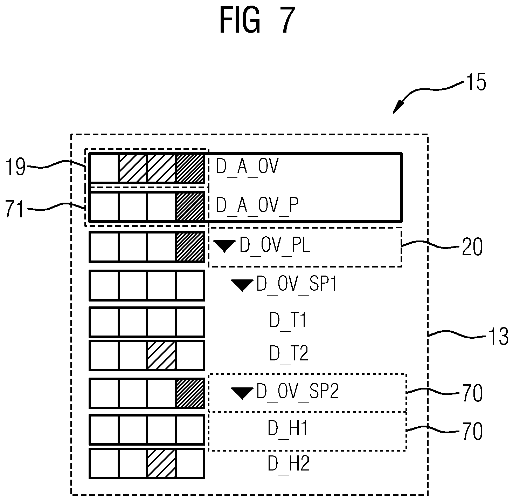

Der Hauptunterschied zu FIG 1 ist, dass dem Operator O2 die von dem Operator O1 im vorherigen Schritt zugeordneten Anlagenvisualisierungen D_OV_SP2 und D_H1 in dem Baum bzw. der Hierarchie 15 durch eine farbliche Hinterlegung kenntlich gemacht sind, was in FIG 6 und im Detail in FIG 7 durch punktierte Linien 70 symbolisiert ist. Ebenfalls in dem Baum 15 kenntlich gemacht (symbolisiert durch eine strichlierte Linie 20) ist dabei die aktuell von dem Operator O2 ausgewählte und in dem rechten Bereich 3 dargebotene Anlagenvisualisierung D_OV_PL. Außerdem ist in dem Bereich der Alarme zusätzlich zu dem Überblicks-Gruppenalarm D_A_OV (siehe Bezugszeichen 19) über alle Anlagenvisualisierungen ein weiterer Überblicks-Gruppenalarm D_A_OV_P (siehe Bezugszeichen 71) eingefügt, der ausschließlich nur Alarme von Anlagenobjekten zusammenfasst, die zu dem Zeitpunkt von den Anlagenvisualisierungen umfasst sind, die dem Operator O2 zugeordnet sind (hier die Anlagenvisualisierungen D_OV_SP2 und D_H1).

In FIG 8 ist ein erfindungsgemäßes Leitsystem 80 für die Bedienung und Beobachtung einer Prozessanlage 100 schematisch dargestellt. Das Leitsystem 80 umfasst die zuvor bereits genannten Operator Station Clients 81, 82 und den Operator Station Server 83. Die Operator Station Client 81 bzw. 82 sind jeweils dazu ausgebildet, eine Benutzerschnittstelle in Form einer Visualisierung, d.h. eine grafische Darbietung, zum Bedienen und Beobachten der Prozessanlage 100 bereitzustellen.

Der Operator Station Server 83 und die Operator Station Clients 81, 82 sind über einen Terminalbus 84 miteinander und optional mit nicht dargestellten weiteren Komponenten des Leitsystems 80 verbunden. Bei dem Operator Station Client 81 handelt es sich beispielsweise um einen PC-basierten Operator-Einzel-Arbeitsplatz und bei dem Operator Station Client 82 um ein mobiles Endgerät.

Ein Operator kann zum Zwecke des Bedienens und Beobachtens über einen der Operator Station Clients 81, 82 mittels des Terminalbus 84 auf den Operator Station Server 83 zugreifen. Beispielsweiser arbeitet der Operator O1 an dem Operator Station Client 81 und der Operator O2 an dem Operator Station Client 82. Der Terminalbus 84 kann, ohne sich darauf zu beschränken, beispielsweise als Industrial Ethernet ausgebildet sein.

Der Operator Station Server 83 weist eine Geräteschnittstelle 85 auf, die mit einem Anlagenbus 86 verbunden ist. Über diese Geräteschnittstelle 85 kann der Operator Station Server 83 mit Automatisierungsgeräten 87 sowie mit optional vorhandenen weiteren Komponenten der Prozessanlage 100 wie Peripheriegeräten (nicht dargestellt) kommunizieren. Der Anlagenbus 86 kann, ohne sich darauf zu beschränken, beispielsweise als Industrial Ethernet ausgebildet sein.

Auf dem Operator Station Server 83 sind (unter anderem) ein Visualisierungsdienst 91, ein Prozessabbild/Ereignis-Manager 92, ein Alarm-Manager 93, ein Anwenderselektions-Manager 94 und ein Speicher 95 implementiert.

Der Visualisierungsdienst 91 initiiert eine Übertragung von Visualisierungsinformationen an den Operator Station Client 81 bzw. 82. Der Visualisierungsdienst 91 umfasst hierzu eine Anlagenvisualisierungshierarchie 98, ein Prozessobjekt 99 und einen Anwenderselektionsdienst 97.

Auf dem Operator Station Client 81 ist beispielhaft die Visualisierung 1 gemäß der Figuren 4 und 5 und auf dem Operator Station Client 82 ist beispielhaft die Visualisierung 60 gemäß der Figuren 6 und 7 dargeboten.

Der Anwenderselektionsdienst 97 ist verantwortlich für die Funktionalitäten der Anwenderselektionen gemäß FIG 4 und 5 (in FIG 8 symbolisiert durch einen Pfeil I).

Mit Hilfe der Anlagenvisualisierungshierarchie 98 erfolgt dabei die Visualisierung der Hierarchie bzw. des Baums 15 der Anlagenvisualisierungen und der Alarme bzw. Gruppenalarme gemäß der Figuren 6 und 7 (in FIG 8 symbolisiert durch einen Pfeil II). Dies gilt entsprechend für die Anlagenvisualisierungen und der Alarme bzw. Gruppenalarme gemäß der Figuren 1 und 2.

In dem Speicher 95 sind im Engineering erzeugte Anlagenvisualisierungen PD hinterlegt (hier beispielsweise die Anlagenvisualisierungen D_1, D_2, D_3).

In dem Prozessabbild/Ereignis-Manager 92 ist eine Momentaufnahme der (Signal-) Zustände von mit dem Operator Station Server 83 verbundenen Geräten und/oder Applikationen hinterlegt. Der Prozessabbild/Ereignis-Manager 92 kann hierzu auch auf den Speicher 95 mit den Anlagenvisualisierungen D_1, D_2, D_3 zugreifen und erzeugt die Alarme und Gruppenalarme der Anlagenvisualisierungen D_1, D_2, D_3 (abgekürzt mit der Bezeichnung "DAS" für Display Alarm Satus), die sich wiederum aus allen (aktiven) Alarmen der Prozessobjekte bilden, die als Block Symbol in der jeweiligen Anlagenvisualisierung vorhanden sind.

Ein Alarmdienst 96 kann Alarmmeldungen aus dem Prozessabbild des Prozessabbild/Ereignis-Managers 92 auslesen und erzeugt die Alarme für die Alarmanzeigen und Gruppenalarme 16, 17, 18, 19, 71 gemäß der Figuren 1, 2, 6 und 7, die dann mit Hilfe der Anlagenvisualisierungshierarchie 98 auf den Operator Station Clients 81 bzw. 82 dargeboten werden.

Auch die Anlagenvisualisierungshierarchie 98 kann auf die Anlagenvisualisierungen D_1, D_2, D_3 und auf das Prozessabbild des Prozessabbild/Ereignis-Managers 92 zugreifen, um diese dann auf den Operator Station Clients 81 bzw. 82 darzubieten (symbolisiert durch einen Pfeil III).

Der Anwenderselektions-Manager 94 hat ebenfalls Zugriff auf den Speicher 95 des Operator Station Servers 83. Dort können Anwenderprofile und persönliche Einstellungen von Operatoren/Bedienern der Prozessanlage 100 hinterlegt werden.

Der Anwenderselektionsdienst 97 und der Anwenderselektions-Manager 94 sind dabei um die Anwenderselektion "priorisierte Anlagenvisualisierungen" PAV (siehe Figuren 4 und 5) erweitert.

Wird eine Anwenderselektion auf einem der Operator Station Clients 81, 82 mit Hilfe des Anwenderselektionsdienstes 97 modifiziert, hier beispielsweise auf dem Operator Station Client 81, so wird dies von dem Anwenderselektions-Manager 94 erfasst (in FIG 8 symbolisiert durch einen Pfeil VI), persistiert und die Änderung auch an ggf. weitere verfügbare Operator Station Server verteilt, so dass sich die Änderung automatisch an alle Operator Station Clients verteilt.

Der Anwenderselektions-Manager 94 informiert hierzu auch die Anlagenvisualisierungshierarchie 98 über diese Änderung (symbolisiert durch den Pfeil V). Die Anlagenvisualisierungshierarchie 98 und die darauf aufbauend erzeugte Visualisierung 60 berücksichtigen somit die von einem Operator genutzte Anwenderselektion "priorisierte Anlagenvisualisierungen" PAV, um dem jeweiligen Operator seine vorrangigen Anlagenvisualisierungen hervorzuheben, und um das beschriebene Alarmmanagement für die Gruppen bzw. Sammelanzeigen der Anlagenvisualisierungen durchzuführen.

Mit der Erfindung kann somit eine laufzeitdynamische und operatoren-übergreifende Koordination vorrangiger Anlagenvisualisierungen für die Bedienung und Beobachtung verfahrenstechnischer Anlagen mit priorisiertem Alarmmanagement erfolgen. Operatoren können sich effizient - auch für verteilte Anlagen unter Verwendung mobiler Endgeräte - abstimmen. Gleichzeitig ist ein Alarmmanagement für vorrangige Anlagenvisualisierungen möglich.

## Patentansprüche

1. Leitsystem (80) für eine technische Anlage (100), insbesondere Fertigungs- oder Prozessanlage, umfassend mehrere Benutzerschnittstellen (1, 60) für ein Bedienen und Beobachten der Anlage (100), wobei die Benutzerschnittstellen (1, 60) ausgebildet sind, Anlagenvisualisierungen (2) für Operatoren der Anlage (100) zu erzeugen,
**dadurch gekennzeichnet, dass** das Leitsystem (80) ausgebildet ist, zur Laufzeit der Anlage (100) von den Operatoren über die Benutzerschnittstellen (1, 60) Informationen über Zuordnungen von Anlagenvisualisierungen (2) zu den Operatoren zu erfassen und den Operatoren auf den Benutzerschnittstellen (1, 60) ihnen hierdurch jeweils zugeordnete Anlagenvisualisierungen (2) kenntlich zu machen.

2. Leitsystem (80) nach Anspruch 1, wobei es ausgebildet ist, die Anlagenvisualisierungen (2) den Operatoren auf den Benutzerschnittstellen (1, 60) strukturiert in einem hierarchischen Baum (15) darzubieten, der insbesondere eine technologische Hierarchie der Anlage (100) widerspiegelt.

3. Leitsystem (80) nach Anspruch 1 oder 2, wobei es ausgebildet ist, für jede der Anlagenvisualisierungen (2) in dem Baum (15) eine Möglichkeit zur Erfassung der Informationen über die Zuordnungen anzubieten.

4. Leitsystem (80) nach einem der vorstehenden Ansprüche, wobei es dazu ausgebildet ist, zur Laufzeit der Anlage (100) in dem Leitsystem (80) angemeldete Operatoren automatisch zu ermitteln und den Operatoren über die Benutzerschnittstellen (1, 60) für eine Zuordnung zur Auswahl anzubieten.

5. Leitsystem (80) nach einem der vorstehenden Ansprüche, bei dem den Operatoren Zugriffsrechte für Anlagenvisualisierungen (2) zugeordnet sind und wobei Leitsystem (80) dazu ausgebildet ist, für die Anlagenvisualisierungen (2) nur jeweils diejenigen der Operatoren für eine Zuordnung zur Auswahl anzubieten, die ein Zugriffsrecht für die jeweiligen Anlagenvisualisierungen (2) haben.

6. Leitsystem (80) nach einem der vorstehenden Ansprüche, wobei die Anlagenvisualisierungen (2) jeweils ein Anlagenbild (5) mit grafischen Repräsentanten von Objekten der Anlage (100) umfassen.

7. Leitsystem (80) nach einem der vorstehenden Ansprüche, wobei es dazu ausgebildet ist, während der Laufzeit der Anlage (100) für die Operatoren zu einem Zeitpunkt dynamisch jeweils einen Gruppenalarm (71) zu erzeugen und visuell auf den Benutzerschnittstellen (1, 60) darzubieten, der ausschließlich nur Alarme von Anlagenobjekten zusammenfasst, die zu dem Zeitpunkt von den Anlagenvisualisierungen (2) umfasst sind, die dem jeweiligen Operator zugeordnet sind.

8. Leitsystem (80) nach einem der vorstehenden Ansprüche, wobei es wenigstens einen Operator Station Server (83) und mehrere mit dem Operator Station Server (83) verbundenen Operator Station Clients (81, 82) umfasst, wobei die Operator Station Clients (81, 82) die Benutzerschnittstellen (1, 60) bereitstellen, wobei der Operator Station Server (83) dazu ausgebildet ist, Visualisierungsinformationen an die Operator Station Client (81, 82) zu übertragen, und wobei die Operator Station Clients (81, 82) dazu ausgebildet sind, anhand der Visualisierungsinformationen die Anlagenvisualisierungen (2) für die Operatoren auf den Benutzerschnittstellen (1, 60) zu erzeugen.

9. Verfahren zum Betrieb eines Leitsystems (80) für eine technische Anlage (100), insbesondere Fertigungs- oder Prozessanlage, umfassend mehrere Benutzerschnittstellen (1, 60) für ein Bedienen und Beobachten der Anlage (100), wobei die Benutzerschnittstellen (1, 60) ausgebildet sind, Anlagenvisualisierungen (2) für Operatoren der Anlage (100) zu erzeugen, **dadurch gekennzeichnet, dass** zur Laufzeit der Anlage (100) von den Operatoren über die Benutzerschnittstellen (1, 60) Informationen über Zuordnungen von Anlagenvisualisierungen (2) zu den Operatoren erfasst und den Operatoren auf den Benutzerschnittstellen (1, 60) ihnen hierdurch jeweils zugeordnete Anlagenvisualisierungen (2) kenntlich gemacht werden.

10. Verfahren nach Anspruch 9, wobei die Anlagenvisualisierungen (2) den Operatoren strukturiert in einem hierarchischen Baum (15) dargeboten werden, der insbesondere eine technologische Hierarchie der Anlage (100) widerspiegelt.

11. Verfahren nach Anspruch 9 oder 10, wobei für jede der Anlagenvisualisierungen (2) in dem Baum (15) eine Möglichkeit zur Erfassung der Informationen über die Zuordnungen angeboten wird.

12. Verfahren nach einem der Ansprüche 9 bis 11, wobei zur Laufzeit der Anlage (100) in dem Leitsystem (80) angemeldete Operatoren automatisch ermittelt und für eine Zuordnung zur Auswahl angeboten werden.

13. Verfahren nach einem der Ansprüche 9 bis 12, wobei den Operatoren Zugriffsrechte für Anlagenvisualisierungen (2) zugeordnet sind und für die Anlagenvisualisierungen (2) nur jeweils diejenigen der Operatoren für eine Zuordnung zur Auswahl angeboten werden, die ein Zugriffsrecht für die jeweiligen Anlagenvisualisierungen (2) haben.

14. Verfahren nach einem der Ansprüche 9 bis 13, wobei die Anlagenvisualisierungen (2) jeweils ein Anlagenbild (5) mit grafischen Repräsentanten von Objekten der Anlage (100) umfassen.

15. Verfahren nach einem der Ansprüche 9 bis 14, wobei während der Laufzeit der Anlage (100) für die Operatoren zu einem Zeitpunkt dynamisch jeweils ein Gruppenalarm (71) erzeugt und visuell auf den Benutzerschnittstellen (1, 60) dargeboten wird, der ausschließlich nur Alarme von Anlagenobjekten zusammenfasst, die zu dem Zeitpunkt von den Anlagenvisualisierungen (2) umfasst sind, die dem jeweiligen Operator zugeordnet sind.

16. Verfahren nach einem der Ansprüche 9 bis 15, wobei das Leitsystem (80) wenigstens einen Operator Station Server (83) und mehrere mit dem Operator Station Server (83) verbundene Operator Station Clients (81, 82) umfasst, wobei die Operator Station Clients (81, 82) die Benutzerschnittstellen (1, 60) bereitstellen, wobei der Operator Station Server (83) Visualisierungsinformationen an die Operator Station Clients (81, 82) überträgt, und wobei die Operator Station Clients (81, 82) anhand der Visualisierungsinformationen die Anlagenvisualisierungen (2) für die Operatoren auf den Benutzerschnittstellen (1, 60) erzeugen.

17. Computerprogramm, umfassend Befehle, die bei der Ausführung des Programms durch einen Computer diesen veranlassen, das Verfahren nach einem der Ansprüche 9 bis 16 auszuführen.
